# EUROPÄISCHE PATENTSCHRIFT

(11) **EP 2 081 998 B1**
(45) Veröffentlichungstag und Bekanntmachung des Hinweises auf die Patenterteilung: **25.08.2010**
(21) Anmeldenummer: 07802357.9
(22) Anmeldetag: 19.09.2007
(51) Int. Cl.: C09D 1/04, C09D 7/12, C04B 28/26

(54) **ZUSAMMENSETZUNGEN ZUR VISKOSITÄTSSTABILISIERUNG VON SILIKAT-BINDER-HALTIGEN FORMULIERUNGEN**
COMPOSITIONS FOR STABILISING THE VISCOSITY OF FORMULATIONS CONTAINING SILICATE BINDERS
COMPOSITIONS POUR STABILISER LA VISCOSITÉ DE FORMULATIONS CONTENANT DES LIANTS À BASE DE SILICATE

(30) Priorität: 28.09.2006 DE 102006045853
(43) Veröffentlichungstag der Anmeldung: 29.07.2009
(73) Patentinhaber: Cognis IP Management GmbH, 40589 Düsseldorf (DE)
(72) Erfinder: BOHLANDER, Ralf, 40699 Erkrath (DE); PESCH, Wolfgang, 41515 Grevenbroich (DE)
(74) Vertreter: Reinhardt, Jürgen
(86) Internationale Anmeldenummer: PCT/EP2007/008140
(87) Internationale Veröffentlichungsnummer: WO 2008/037382

(56) Entgegenhaltungen:
- EP-A- 1 431 354
- WO-A-03/104159
- WO-A-2005/083013
- WO-A-2005/118726

## Beschreibung

### Gebiet der Erfindung

Die Erfindung betrifft die Verwendung von Zusammensetzungen enthaltend (a) Amine und/oder quaternäre Ammoniumverbindungen und (b) Alkylsilikonate zur Viskositätsstabilisierung von Silikatbinder-haltigen Formulierungen.

### Stand der Technik

Dispersionssilikatsysteme als einkomponentige gebrauchsfertige und lagerstabile Mischungen sind bekannt. Der Wasserglasbinder in den fertigen Formulierungen reagiert jedoch im Lauf der Zeit mit den anderen Inhaltsstoffen, was zu einer Nachdickung bis zur Unbrauchbarkeit führt. Als Gegenmaßnahme zur Viskositätsstabilisierung sind gemäß o.a. Literatur quartäre Ammoniumverbindungen (QAV) als wässrige Lösung im Handel erhältlich.

Gemäß US 3,442,671 wird für Kaliwasserglas eine synergistische Mischung aus aminhaltigem Komplexierungsmittel und evtl. zusätzlichem Gehalt an Hydroxyaminen hingewiesen. Über eine Mitverwendung von Silikonaten ist nichts offenbart.

In US 5,607,503 wird die Zugabe von Ammonium-, Amin- oder Amid-Verbindungen zu wasserglasbasierten Mischungen für Beschichtungszwecke beschrieben. Hierbei führt die Zugabe der N-haltigen Verbindungen zu einer Ausfällung eines Reaktionsproduktes mit dem Silikat, ergo eher zu einer Instabilisierung der Anwendungslösung bzgl. Lagerstabilität.

In US 2005/0132932 A1 wird die Zugabe von N-haltigen Komplexierunsgmitteln, konkret EDTA-4K, zur Vermeidung der Gelierung von Wasserglas basierenden Znhaltigen Systemen beschrieben. Die Zugabe von EDTA zu üblichen einkomponentigen Dispersions-Silikatsystemen hat keinen Einfluß auf deren Viskositätsverhalten.

In DE-A-37,13,495 wird ein Beispiel einer lagerstabilen Kaliwasserglasdispersions-Grundierung angegeben. Explizit wird eine quartäre Aminbase als Additiv angegeben ohne Hinweis auf deren Funktion.

Für Mischungen höheren Moduls SiO₂/Alk₂O, z.B. Wasserglas und Kieselsol, wurden quaternäre Ammoniumverbindungen als Rezepturbestandteil zur Visksitätsstabilisierung empfohlen in EP-B-1,222,234**.** Es gibt keine Hinweise auf die Mitverwendung von Alkylsilikonaten in der Formulierung.

In EP-B-1,185,486 werden wasserlösliche organische Stickstoffverbindungen als stabilisierende Komponente im Text beschrieben, in den Beispielen zur Anwendung kommt letztlich eine spezifische quaternisierte Ammoniumverbindung. Es gibt keine Hinweise auf die Mitverwendung von Alkylsilikonaten in den Formulierungen.

In einer neuen EP-A-1,431,354 werden spezielle Diamine als Viskositätsstabilisatoren vorgeschlagen. Nach Untersuchungen der Anmelderin sind diese allenfalls marginal aktiv, bewirken nur eine geringe Viskositätssenkung in Einwirkung auf vorhandene Polyacrylate (Binderdispersion oder Dispergatoren). Da Kaliumsilikat als Füllstoff in deren Rezepturbeispielen aufgeführt ist, kann nicht nachvollzogen werden, ob überhaupt und welche Mengen Wasserglasbinder eingesetzt werden. Darüber hinaus werden Alkylsilikonate in EP-A-1,431,354 nicht als notwendige Rezepturbestandteile offenbart.

Alkylpolysiloxane, insb. das Kaliummethyl- oder propylsilikonat, sind als wasserlösliches Siloxan als Hydrophobierungskomponente u.a. auch für Silikatsysteme lange bekannt und werden alleine oder in Kombination mit Wasserglas zur Abdichtung von Mauerwerk gegen Wasser eingesetzt. In den wenig aussagekräftigen Anwendungsbeispielen der EP-1,431,354 wird allgemein auch auf eine mögliche Mitverwendung eines Hydrophobierungsmittels ohne nähere Spezifikation hingewiesen.

Dokument WO2005118726 offenbart eine Silikatfarbenzusammensetzung enthaltend Kaliumwasserglas als Bindemittel, Tetraalkyl-alkylendiamin als Stabilisator für Wasserglas und Kaliummethylsilikonat als Hydrophobierungsmittel.

### Beschreibung der Erfindung

Aufgabe der vorliegenden Erfindung war es, Zusammensetzungen bereitzustellen, die sich zur Viskositätsstabilisierung von Silikatbinder-haltigen (Wasserglas-haltigen) Formulierungen und insbesondere zur Viskositätsstabilisierung von Putzen und Farben, die Wasser, Füllstoffe und Wasserglas (als Bindemittel) enthalten, eignen.

In diesem Zusammenhang sei festgestellt, dass in den hier in Rede stehenden silikatischen Systemen, die Wasser, Füllstoffe und (als Bindemittel) Wasserglas sowie gegebenenfalls ein konventionelles Verdickungsmittel enthalten ohne weitere Maßnahmen stets ein Nachdicken stattfindet. Es ist jedoch gewünscht, die Viskosität auf Werte in einem mittleren Viskositätsbereich zu beschränken. Mit anderen Worten: Die Viskosität soll durchaus nicht im äußerst niedrigviskosen Bereich liegen und auch nicht im hochviskosen Bereich, da beides zu schlechter Verarbeitbarkeit führt. Hingegen soll die Viskosität in einem mittleren Viskositätsbereich, insbesondere etwa 3000 bis 4000 mPas stabil gehalten werden. Üblicherweise findet jedoch ohne weitere Maßnahmen bzw. bei Einsatz konventioneller Viskositätsadditive ein permanentes Nachdicken statt, das auch über den gewünschten mittleren Viskositätsbereich hinaus reicht. Hier ist es Ziel der vorliegenden Erfindung, zu verhindern, dass ein stetiges, sozusagen unaufhörliches Ansteigen der Viskosität stattfindet. Insbesondere soll die Viskosität keinesfalls auf Werte über 6000 mPas ansteigen.

Insbesondere ist von den erfindungsgemäßen Systemen zu fordern, dass die Viskosität nach anfänglichem Anstieg einen praktisch konstanten Endwert im mittleren Viskositätsbereich erreicht.

Überraschenderweise wurde gefunden, dass Kombinationen von bestimmten organischen N-haltigen Verbindungen mit Alkylsilikonaten eine synergistische Stabilisierungswirkung in Dispersionssilikatsystemen ausüben, welche mit den jeweiligen Komponenten alleine nicht erreicht werden kann. Diese Kombinationen können grundsätzlich als zwei getrennt zugegebene Stabilisierungskomponenten eingesetzt werden, als eine zusammengemischte Stabilisierungskomponente oder vorzugsweise bereits gebrauchsfertig mit dem Wasserglasbinder einkomponentig formuliert zum Einsatz kommen.

Gegenstand der vorliegenden Erfindung ist die Verwendung von Zusammensetzungen enthaltend
(a) ein oder mehrere N-haltige Verbindungen mit einem Molgewicht im Bereich von 120 bis 10.000, die ausgewählt sind aus der Gruppe, die gebildet wird von (gewünschtenfalls ethoxylierten und/oder propoxylierten) Aminen und/oder quaternären Ammoniumverbindungen und
(b) ein oder mehrere Alkylsilikonate
zur Viskositätsstabilisierung von Silikatbinder-haltigen Formulierungen.

Unter Silikatbindern werden im Rahmen der vorliegenden Erfindung die verschiedensten Typen von Wasserglas verstanden. Unter Wasserglas versteht der Fachmann bekanntlich aus dem Schmelzfluß erstarrte, glasige, wasserlösliche Kalium- und Natriumsilikate oder deren viskose wässrige Lösungen. Im Rahmen der vorliegenden Erfindung sind jedoch auch solche Silikate mitgemeint, bei denen das Kation nicht Natrium oder Kalium ist, sondern auch Lithium, Rubidium, Ammonium, Tetramethyl-, Tetraethyl- oder Tetraethanolammonium.

Ausdrücklich sei festgestellt, dass sich die so definierten Silikatbinder, die in ihrem Polymerteil anorganischer Natur sind, von den Verbindungen (b) strukturell unterscheiden.

Unter **Aminen (a)** werden im Rahmen der vorliegenden Erfindung organische Substanzen verstanden, die ein oder mehrere Amingruppen pro Molekül enthalten. Gewünschtenfalls können neben den Amingruppen auch weitere funktionelle Gruppen im Molekül vorhanden sein. Die Amine (a) können primäre, sekundäre und tertiäre N-Atome enthalten. Bevorzugt sind Amine mit sekundären Amingruppen. Die Siedepunkte der Amine (a) liegen bei Normaldruck von 760 Torr vorzugsweise oberhalb von 250 °C. Beispiele geeigneter Aminverbindungen sind Triethanolamin, Diisopropanolamin, Triisopropanolamin, NNN'N'-tetraethanol-ethylendiamin, NNN'N'-tetrapropanolpropylendiamin, Dipropylentriamin, Tetraethylenpentamin.

In einer Ausführungsform setzt man als Amine (a) Verbindungen der Formel (I) ein

R¹R²N-Z-NR¹R² (I)

worin die Reste R¹ und R² unabhängig voneinander H, CH₃, CH₂-CH₃, CH₂CH₂OH, CH₂CH(OH)CH₃ oder Y-NR¹R² und Y und Z unabhängig voneinander eine Gruppe (CH₂)ₙ mit n= 1-8 bedeuten, mit der Maßgabe, dass das Molgewicht der Verbindungen (I) im Bereich von 120 bis 10.000 liegt.

Bei den Verbindungen, bei denen mindestens einer der Reste R¹ und R² die Bedeutung Y-NR¹R² hat, handelt es sich um Polyalkylenimine, die eine spezielle Unterklasse der Amine darstellen. Hierbei sind die sogenannten Polyethylenimine besonders bevorzugt. Das Molgewicht der Polyethylenimine liegt vorzugsweise im Bereich von 500 bis 10.000.

In einer Ausführungsform sind die Amine (I) ethoxyliert und/oder propoxyliert. Mithin handelt es sich dann um Anlagerungsprodukte von Ethylen- und/oder Propylenoxid an die Verbindungen (I). Beispiele hierfür sind etwa ethoxylierte Etylenimine.

Unter **quaternären Ammoniumverbindungen (a)** werden im Rahmen der vorliegenden Erfindung organische Substanzen verstanden, die erhältlich sind durch Umsetzung von Aminen mit Methylchlorid, Ethylenoxid, Propylenoxid oder Epichlorhydrin.

In einer Ausführungsform setzt man als quaternäre Ammoniumverbindungen (a) solche Verbindungen ein, die erhältlich sind durch Umsetzung von Verbindungen der Amine (I) mit Methylchlorid, Ethylenoxid, Propylenoxid oder Epichlorhydrin.

Unter **Alkylsilikonaten (b)** sind Verbindungen der Struktur (II) zu versehen,

HO-[Si(R³)(OX)-O-]ₙH (II)

worin der Rest R³ eine Alkylgruppe mit 1 bis 8 C-Atomen, X ein Kation und n eine Zahl im Bereich von 1 bis 6 bedeutet. Vorzugsweise liegt das Molgewicht der Verbindungen (b) im Bereich von 100 bis 500. Vorzugsweise ist R³ eine Methylgruppe oder eine n-Propylgruppe. Als Kationen sind insbesondere die Alkalimetalle, insbesondere Kalium bevorzugt

Beispiele geeigneter Verbindungen (II) sind Kaliummethylsilikonat und Natriumpropylsilikonat.

In einer Ausführungsform setzt man solche Verbindungen (a) und (b) ein, die lichtecht sind. Hierunter wird verstanden, dass die Verbindungen in Substanz oder wässriger Lösung mindestens für 3 Monate farblos bleiben, also nicht vergilben.

In einer Ausführungsform setzt man solche Verbindungen (a) und (b) ein, die einen allenfalls sehr geringen, vorzugsweise gar keinen Eigengeruch aufweisen (geruchlos sind).

In einer Ausführungsform setzt man solche Verbindungen (a) und (b) ein, die einen Siedepunkt oberhalb von 250 °C Bei einem Druck von 101 kPa aufweisen und insbesondere bei 20 °C einen Dampfdruck unterhalb von 0,01 kPa aufweisen. Solche Verbindungen sind als VOC-frei einzustufen.

Silikatbinder-haltige Formulierungen sind insbesondere Wasserglasbinder-basierte Beschichtungssysteme, z.B. Wasserglas-basierte Putze und Farben. Wie der Fachmann weiß handelt es sich bei letzteren um flüssige, gießfähige Systeme, die Wasser, Silikatbinder und Füllstoffe enthalten. Weitere übliche Additive, etwa Pigmente, können zusätzlich enthalten sein.

In einer bevorzugten Ausführungsform bezieht sich die. Erfindung auf die Verwendung von Zusammensetzungen enthaltend
(a) ein oder mehrere N-haltige Verbindungen mit einem Molgewicht im Bereich von 120 und 10.000, die ausgewählt sind aus der Gruppe, die gebildet wird von Aminen und/oder quaternären Ammoniumverbindungen und
(b) ein oder mehrere Alkylsilikonate
zur Viskositätsstabilisierung von Putzen und Farben, die Wasser, Füllstoffe und/oder Pigmente und einen Wasserglasbinder enthalten.

Bezüglich der Verbindungen (a) und (b) gilt das bereits oben gesagte.

Unter **Wasserglas** versteht der Fachmann wie oben bereits dargestellt Natrium- und Kalium-Silikate und deren wässrige Lösungen. Im Rahmen der vorliegenden Erfindung werden aber auch solche Verbindungen unter dem Begriff Wasserglas subsumiert, die dieselbe Struktur wie herkömmliches Wasserglas haben, jedoch anstelle von Natrium bzw Kalium andere Kationen aufweisen, nämlich Lithium, Rubidium, Ammonium, Tetramethyl-, Tetraethyl- oder Tetraethanolammonium.

Wasserglas hat in den genannten Putzen und Farben die Funktion des hauptsächlichen Bindemittels.

Die Natur der **Füllstoffe** ist an sich nicht beschränkt. Es können alle dem Fachmann einschlägig vertrauten Füllstoffe eingesetzt werden, insbesondere mineralische Füllstoffe wie Carbonate, Silikate, Laponite, Sulfate (Schwerspat), Oxide (Quarz, Zinkoxid). Die Korngrößen richten sich nach dem speziellen Anwendungszweck und sind bei Farben üblicherweise feinteiliger als bei Putzen.

Die Natur der **Pigmente** ist an sich nicht beschränkt. Es können alle dem Fachmann einschlägig vertrauten Pigmente eingesetzt werden, insbesondere mineralische Pigmente wie Titandioxid, Eisenoxide, Ultramarin, Zinkoxid, Chromgelb, Kobaltblau, Spinellschwarz.

Das Stabilisierungssystem wird vorzugsweise direkt mit dem Silikatbinder vorgemischt und als Einkomponente eingesetzt. Aufgrund der verminderten Anzahl an Einzelkomponenten wird die Formulierungskomplexität reduziert. Der Anwender muss weniger Einzelkomponenten lagern und braucht keine Gefahrstoffe mehr zu handhaben. Formulierte Farben und Putze erfüllen die gestiegenen Anforderungen an reduziertem VOC-Gehalt und verminderten geruchsbildenden Emissionen. Es lassen sich wesentlich füllstoffreichere Rezepturen herstellen als ohne das beschriebene Stabilisationssystem.

Angesichts der bekannten Intoleranz von Wasserglaslösungen gegenüber organischen Additiven ist es überraschenderweise möglich, sehr hochkonzentrierte, insbesondere Kaliwasserglaslösungen herzustellen. In letzterem Falle ist eine Rezeptierung von Dispersionssilikatsystemen mit wenigen und ausschließlich kennzeichnungsfreien Rezepturbestandteilen möglich, die Putz- bzw. Farbmischungen Farbmischung erfüllen strenge Forderungen nach VOC-Reduktion (VOC = volatile organic carbon) und Allergenfreiheit.

### Beispiele

### 1. Eingesetzte Substanzen

Acronal S559: Acrylatdispersion (Fa. BASF)
Hydropalat 5040: Dispergierhilfsmittel (Fa. Cognis)
Walocel 10000: CMC-Verdicker (Fa. WolffCellulosics)
Titandioxid 2056: Pigment (Fa. Kronos Titan)
Foamaster 714: Entschäumer (Fa. Cognis)

Mineralische Füllstoffe : Gemisch aus
(x) Omyacarb 5GU (Calciumcarbonat, ca. 5µ Körnung, Fa. OMYA),
(y) Omyacarb 2GU (Calciumcarbonat, ca 2µ Körnung) und
(z) Chinafill 84 (Kaolin ca 2µ; Fa GFR),
wobei die Komponenten (x), (y) und (z) in den Gewichtsverhältnissen 13 : 24 : 3 eingesetzt wurden.

Kaliumsilikat MV4,15: 31 Gew.%ige wässrige Lösung (Fa. Cognis)
Kalilauge (zur pH-Einstellung): 50 %-ig in Wasser
Silres BS 16: 34% K-Methylsilikonat (Fa. Wacker)
Polyethylenimin 2000: Polyethylenimin mit Molgewicht 2000 (50%-ig in Wasser, Fa. BASF)
Ethoxyliertes Polyethylenimin: EThoxyliertes Polyethylenimin 800: (75%-ig in Wasser, Fa. BASF)
N,N,N',N'-tetrakis(hydroxypropyl)ethylendiamin: 50%ig in Wasser (Quadrol, Fa. BASF)
Cycloquart: Anlagerungsprodukt von 3 mol Propylenoxid pro mol N,N,N',N'tetramethyl-hexamethylendiamin (Fa. Cognis)

### 2. Rezepturen (Wasserglasfarben)

### Beispiel 1

Es wurde zunächst eine Grundmischung der Substanzen Nr. 1 - 9 gemäß Tabelle 1 hergestellt:

**Tabelle 1**

| Nr. | Komponente | Menge (Gewichtsteile) | Bemerkung |
|---|---|---|---|
| 1 | Wasser | 19 | |
| 2 | Acronal S559 | 8 | |
| 3 | Hydropalat 5040 | 1 | |
| 4 | Walocel 10000 | 0,2 | |
| 5 | Titandioxid 2056 | 9 | |
| 6 | Foamaster 714 | 0,3 | |
| 7 | mineralische Füllstoffe | 40 | |
| 8 | Kaliumsilikat MV4,15 | 20 | |
| 9 | Wasser / Kalilauge | 0,5 | |
| 10 | Silres BS 16 | 1,5 | Komponente (b) |
| 11 | Polyethylenimin 2000 | 0,5 | Komponente (a) |

Bei der Herstellung der Grundmischung wurde stets auf einen exakt gleichen AnfangspH-Wert von 11,5 eingestellt, um Alkalieinflüsse auf die Viskosität auszuschließen. Hierzu diente die Kalilauge. Aus diesem Grunde ist in Position 9 angegeben "Wasser / Kalilauge", da die Menge an zur pH-Einstellung nötigen Menge an Kalilauge leicht variieren kann; deswegen bezeichnet Position 9 die Summe von benötigter Kalilauge und Wasser.

Zu dieser Grundmischung wurden anschließend die Substanzen Nr. 10 (Zusatz a)) und Nr. 11 (Zusatz b)) hinzugefügt. Die so hergestellte Wasserglasfarbe wurde bei 30°C gelagert und die Viskosität der Farbe nach 1, 3, 10 und 28 Tagen Lagerung bestimmt (Brookneld-Rotationsviskosimeter, RVT, Spindel 86, Messung bei 25°C).

Die Viskositäten betrugen: 1900 mPas nach 1 Tag, 2500 mPas nach 3 Tagen und 3600 mPas nach 10 Tagen. Bei weiterer Lagerung veränderte sich die Viskosität nicht mehr (es wurden 3600 mPas auch nach 28 Tagen gemessen).

### Beispiel 2

Beispiel 1 wurde wiederholt, wobei jedoch als Komponente Nr. 11 ethoxyliertes Polyethylenimin eingesetzt wurde.

Die Viskositätsdaten waren: 1800 mPas nach 1 Tag, 2400 mPas nach 3 Tagen und 3500 mPas nach 10 Tagen. Bei weiterer Lagerung veränderte sich die Viskosität nicht mehr (es wurden 3500 mPas auch nach 28 Tagen gemessen).

### Vergleichsbeispiel 1 ("Nullprobe")

Beispiel 1 wurde wiederholt, wobei anstelle der Komponenten Nr. 10 und Nr. 11 eine jeweils gewichtsgleiche Menge Wasser eingesetzt wurde.

Die Viskositätsdaten waren: 2200 mPas nach 1 Tag, 4000 mPas nach 3 Tagen und 4800 mPas nach 10 Tagen. Bei weiterer Lagerung verschlechterte sich die Viskosität weiter: sie stieg auf 5000 mPas nach 28 Tagen und war weiter nicht konstant.

### Vergleichsbeispiel 2 ("Probe ohne Komponente a")

Beispiel 1 wurde wiederholt, wobei anstelle der Komponente Nr. 10 eine gewichtsgleiche Menge Wasser und anstelle der Komponente Nr. 11 eine gewichtsgleiche Menge Cycloquart eingesetzt wurde.

Die Viskositätsdaten waren: 2000 mPas nach 1 Tag, 3700 mPas nach 3 Tagen und 4500 mPas nach 10 Tagen. Bei weiterer Lagerung verschlechterte sich die Viskosität weiter: sie stieg auf 4700 mPas nach 28 Tagen.

### Vergleichsbeispiel 3 ("Probe ohne Komponente a")

Beispiel 1 wurde wiederholt, wobei anstelle der Komponenten Nr. 10 und Nr. 11 eine gewichtsgleiche Menge Silres BS 16 eingesetzt wurde.

Die Viskositätsdaten waren: 2200 mPas nach 1 Tag, 4100 mPas nach 3 Tagen und 4900 mPas nach 10 Tagen. Bei weiterer Lagerung verschlechterte sich die Viskosität weiter: sie stieg auf 5300 mPas nach 28 Tagen.

### Vergleichsbeispiel 4 ("Probe ohne Komponente b")

Beispiel 1 wurde wiederholt, wobei anstelle der Komponente Nr. 1o und Nr. 11 eine gewichtsgleiche Menge N,N,N',N'-tetrakis(hydroxypropyl)ethylendiamin eingesetzt wurde.

Die Viskositätsdaten waren: 2100 mPas nach 1 Tag, 4300 mPas nach 3 Tagen und 5700 mPas nach 10 Tagen. Bei weiterer Lagerung verschlechterte sich die Viskosität weiter: sie stieg auf 7000 mPas nach 28 Tagen.

### Beispiel 3

Es wurde zunächst eine Grundmischung der Substanzen Nr. 1 - 9 gemäß Tabelle 2 hergestellt. Komponenten Nr. 10 und 11 bereits zuvor in der konzentrierten Kaliwasserglaslösung vorgelöst.

Bei der Herstellung der Grundmischung wurde stets auf einen exakt gleichen AnfangspH-Wert von 11,5 eingestellt, um Alkalieinflüsse auf die Viskosität auszuschließen. Hierzu diente die Kalilauge. Aus diesem Grunde ist in Position 9 angegeben "Wasser / Kalilauge", da die Menge an zur pH-Einstellung nötigen Menge an Kalilauge leicht variieren kann; deswegen bezeichnet Position 9 die Summe von benötigter Kalilauge und Wasser.

**Tabelle 2**

| Nr. | Komponente | Menge (Gewichtsteile) | Bemerkung |
|---|---|---|---|
| 1 | Wasser | 19 | |
| 2 | Acronal S559 | 8 | |
| 3 | Hydropalat 5040 | 1 | |
| 4 | Walocel 10000 | 0,2 | |
| 5 | Titandioxid 2056 | 9 | |
| 6 | Foamaster 714 | 0,3 | |
| 7 | mineralische Füllstoffe | 40 | |
| 8 | Kaliumsilikat MV4,15 | 20 | |
| 9 | Wasser / Kalilauge | 0,5 | |
| 10 | Silres BS 16 | 1,5 | Komponente (b) |
| 11 | Polyethylenimin 2000 | 0,5 | Komponente (a) |

Die so hergestellte Wasserglasfarbe wurde bei 30°C gelagert und die Viskosität der Farbe nach 1, 3, 10 und 28 Tagen Lagerung bestimmt (Brookfield-Rotationsviskosimeter, RVT, Spindel 86, Messung bei 25°C).

Die Viskositäten betrugen: 1800 mPas nach 1 Tag, 2200 mPas nach 3 Tagen und 3500 mPas nach 10 Tagen. Bei weiterer Lagerung veränderte sich die Viskosität nicht mehr (es wurden 3500 mPas auch nach 28 Tagen gemessen).

### Beispiel 4

Beispiel 3 wurde wiederholt, wobei jedoch als Komponente Nr. 11 ethoxyliertes Polyethylenimin eingesetzt wurde.

Die Viskositätsdaten waren: 1700 mPas nach 1 Tag, 2300 mPas nach 3 Tagen und 3400 mPas nach 10 Tagen. Bei weiterer Lagerung veränderte sich die Viskosität nicht mehr (es wurden 3400 auch mPas nach 28 Tagen gemessen).

### Vergleichsbeispiel 5 ("Probe ohne Komponente a")

Beispiel 3 wurde wiederholt, wobei anstelle der Komponenten Nr. 10 und Nr. 11 eine gewichtsgleiche Menge Silres BS 16 eingesetzt wurde.

Die Viskositätsdaten waren: 2200 mPas nach 1 Tag, 4400 mPas nach 3 Tagen und 5800 mPas nach 10 Tagen. Bei weiterer Lagerung verschlechterte sich die Viskosität weiter: sie stieg auf 7100 mPas nach 28 Tagen.

### Vergleichsbeispiel 6 ("Probe ohne Komponente b")

Beispiel 3 wurde wiederholt, wobei anstelle der Komponente Nr. 10 und Nr. 11 eine gewichtsgleiche Menge N,N,N',N'-tetrakis(hydroxypropyl)ethylendiamin eingesetzt wurde.

Die Viskositätsdaten waren: 2100 mPas nach 1 Tag, 4000 mPas nach 3 Tagen und 4800 mPas nach 10 Tagen. Bei weiterer Lagerung verschlechterte sich die Viskosität weiter: sie stieg auf 5200 mPas nach 28 Tagen.

## Patentansprüche

1. Verwendung von Zusammensetzungen enthaltend
(a) ein oder mehrere N-haltige Verbindungen mit einem Molgewicht im Bereich von 120 und 10.000, die ausgewählt sind aus der Gruppe, die gebildet wird von Aminen und/oder quaternären Ammoniumverbindungen und
(b) ein oder mehrere Alkylsilikonate
zur Viskositätsstabilisierung von Silikatbinder-haltigen Formulierungen.

2. Verwendung nach Anspruch 1, wobei es sich bei den Silikatbinder-haltigen Formulierungen um Putze und Farben handelt, die Wasser, Füllstoffe und/oder Pigmente und einen Wasserglasbinder enthalten.

3. Verwendung nach Anspruch 2, wobei es sich bei den Füllstoffen um mineralische Füllstoffe vom Carbonat- und/oder Silikat-Typ handelt.

4. Verwendung nach Anspruch 2 oder 3, wobei man die Amine auswählt aus Verbindungen der Formel (I)
R¹R²N-Z-NR¹R² (I)
worin die Reste R¹ und R² unabhängig voneinander H, CH₃, CH₂-CH₃, CH₂CH₂OH, CH₂CH(OH)CH₃ oder Y-NR¹R² und Y und Z unabhängig voneinander eine Gruppe (CH₂)ₙ mit n= 1-8 bedeuten.

5. Verwendung nach Anspruch 2 oder 3, wobei man die Amine auswählt aus der Gruppe der Polyethylenimine oder der ethoxylierten Polyethylenimine.

6. Verwendung nach Anspruch 2 oder 3, wobei man Alkylsilikonate der Struktur (II) einsetzt,
HO-[Si(R³)(OX)-O-]ₙH (II)
worin der Rest R³ eine Alkylgruppe mit 1 bis 8 C-Atomen, X ein Kation und n eine Zahl im Bereich von 1 bis 6 bedeutet.

## Claims

1. Use of compositions containing
(a) one or more N-containing compounds having a molecular weight in the range from 120 to 10 000, which are selected from the group consisting of amines and/or quaternary ammonium compounds, and
(b) one or more alkyl siliconates for stabilizing the viscosity of formulations containing silicate binders.

2. Use according to Claim 1, the formulations containing silicate binders being renders and paints which contain water, fillers and/or pigments and a waterglass binder.

3. Use according to Claim 2, the fillers being mineral fillers of the carbonate and/or silicate type.

4. Use according to Claim 2 or 3, the amines being selected from compounds of the formula (I)
R¹R²N-Z-NR¹R² (I)
in which the radicals R¹ and R², independently of one another, denote H, CH₃, CH₂-CH₃, CH₂CH₂OH, CH₂CH(OH)CH₃ or Y-NR¹R² and Y and Z, independently of one another, denote a group (CH₃) where n = 1-8.

5. Use according to Claim 2 or 3, the amines being selected from the group consisting of polyethyleneimines or the ethoxylated polyethyleneimines.

6. Use according to Claim 2 or 3, alkyl siliconates of the structure (II)
HO-[Si(R³) (OX)-O-]ₙH (II)
in which the radical R³ denotes an alkyl group having 1 to 8 C atoms, X denotes a cation and n denotes a number in the range from 1 to 6, being used.

## Revendications

1. Utilisation de compositions contenant
(a) un ou plusieurs composés azotés présentant un poids molaire dans la plage de 120 à 10 000, qui sont choisis dans le groupe formé par les amines et/ou les composés d'ammonium quaternaire et
(b) un ou plusieurs alkylsiliconates pour la stabilisation de la viscosité de formulations contenant des liants silicatés.

2. Utilisation selon la revendication 1, où il s'agit, pour les formulations contenant des liants silicatés, d'enduits et de peintures, qui contiennent de l'eau, des charges et/ou des pigments et un liant de type verre soluble.

3. Utilisation selon la revendication 2, où il s' agit, pour les charges, de charges minérales du type carbonate et/ou silicate.

4. Utilisation selon la revendication 2 ou 3, où on choisit les amines parmi les composés de formule (I)
R¹R²N-Z-NR¹R² (I)
où les radicaux R¹ et R² représentent, indépendamment l'un de l'autre, H, CH₃, CH₂-CH₃, CH₂CH₂OH, CH₂CH(OH)CH₃ ou Y-NR¹R² et Y et Z signifient, indépendamment l'un de l'autre, un groupe (CH₂)ₙ avec n = 1-8.

5. Utilisation selon la revendication 2 ou 3, où on choisit les amines dans le groupe des polyéthylène-imines ou des polyéthylène-imines éthoxylées.

6. Utilisation selon la revendication 2 ou 3, où on utilise des alkylsiliconates de structure (II),
HO-[Si(R³) (OX)-O-]ₙH (II)
où le radical R³ signifie un groupe alkyle comprenant 1 à 8 atomes de carbone, X signifie un cation et n signifie un nombre dans la plage de 1 à 6.
